# FASCICULE DE BREVET EUROPEEN

(11) **EP 0 887 237 B1**
(45) Date de publication et mention de la délivrance du brevet: **07.08.2002**
(21) Numéro de dépôt: 98401518.0
(22) Date de dépôt: 22.06.1998
(51) Int. Cl.: B60R 19/20

(54) **Procédé de protection contre les chocs entre deux véhicules au moyen d'au moins un élément gonflable et dispositif pour sa mise en oeuvre**
Verfahren zum Schutz gegen Aufprälle zwischen zwei Fahrzeugen mittels mindestens eines aufblasbaren Elements und Vorrichtung zur Durchführung des Verfahrens
Method for protecting against shocks between two vehicles using at least one inflatable element and device for carrying out the method

(30) Priorité: 23.06.1997 FR 9707770
(43) Date de publication de la demande: 30.12.1998
(73) Titulaire: GEC ALSTHOM TRANSPORT SA, 75116 Paris (FR)
(72) Inventeur: Laporte, Jean-Jacques, 17000 La Rochelle (FR); Tassilly, Eric, 17137 B l'Houmeau (FR); Muttin, Frédéric, 17000 La Rochelle (FR)
(74) Mandataire: Gosse, Michel

(56) Documents cités:
- DE-A- 2 139 187
- US-A- 3 760 414

## Description

La présente invention concerne les éléments gonflables pour la protection contre les chocs entre deux véhicules, en général, et porte, plus particulièrement, sur un procédé de protection contre les chocs entre deux véhicules au moyen d'au moins un élément gonflable et un dispositif pour sa mise en oeuvre.

Le procédé de protection contre les chocs entre deux véhicules au moyen d'au moins un élément gonflable de l'invention s'applique de préférence au domaine ferroviaire.

Par élément gonflable il faut ici comprendre tout élément du type sac gonflable plus couramment désigné, dans le domaine automobile, sous le nom de air-bag.

Le document GB 2 020 234 montre la mise en oeuvre d'un élément gonflable à l'avant d'un véhicule ferroviaire.

Des générateurs de gaz sont utilisés pour l'ouverture des éléments gonflables.

Aussi un but de l'invention est-il un procédé de protection contre les chocs entre deux véhicules au moyen d'au moins un élément gonflable et un dispositif pour sa mise en oeuvre, permettant de protéger intégralement les parties des véhicules susceptibles d'entrer en contact lors d'un choc.

En d'autres termes, un but du procédé de protection contre les chocs entre deux véhicules au moyen d'au moins un élément gonflable de l'invention est de réduire le niveau d'accélération de manière à réduire l'endommagement de la structure des véhicules.

Le procédé de protection contre les chocs entre deux véhicules au moyen d'au moins un élément gonflable et le dispositif pour sa mise en oeuvre sont tel que caractérisé dans les revendications.

Un avantage du procédé de protection contre les chocs entre deux véhicules au moyen d'au moins un élément gonflable et du dispositif pour sa mise en oeuvre de l'invention est de diminuer les coûts de réparation des structures des véhicules endommagés.

Un autre avantage du procédé de protection contre les chocs entre deux véhicules au moyen d'au moins un élément gonflable et du dispositif pour sa mise en oeuvre de l'invention est de fournir un système simple.

Un autre avantage du procédé de protection contre les chocs entre deux véhicules au moyen d'au moins un élément gonflable et du dispositif pour sa mise en oeuvre de l'invention est d'anticiper la collision.

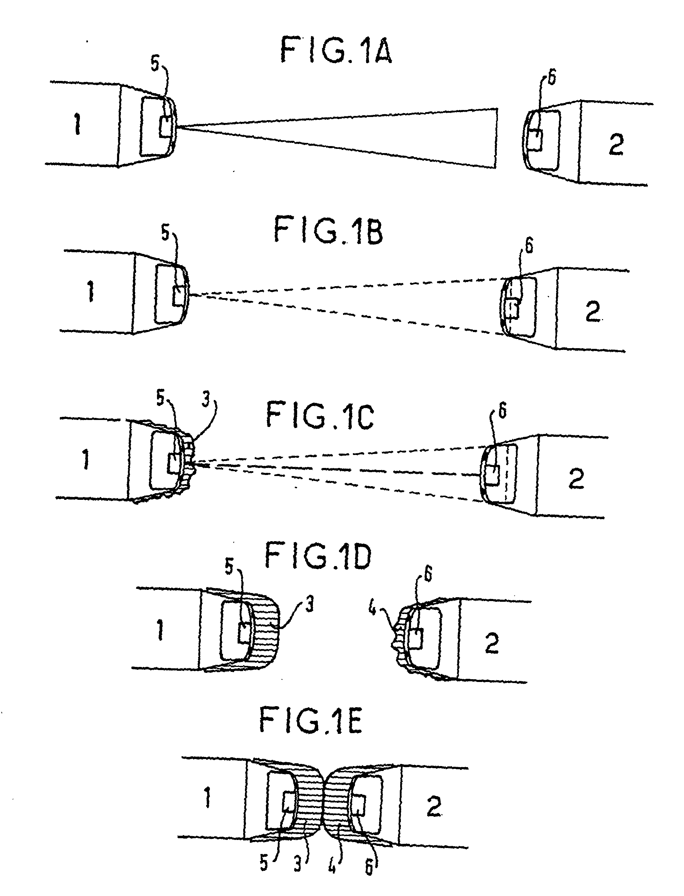

D'autres buts, caractéristiques et avantages de l'invention apparaîtront à la lecture de la description du mode de réalisation préféré du procédé de protection contre les chocs entre deux véhicules au moyen d'au moins un élément gonflable, description faite en liaison avec les dessins dans lesquels les figures 1A à 1E illustrent le procédé de protection contre les chocs entre deux véhicules au moyen d'au moins un élément gonflable et le dispositif pour sa mise en oeuvre conforme à l'invention.

Les figures 1A à 1E montrent un premier 1 et un second 2 véhicules, par exemple ferroviaires, circulant sur la même voie.

Plusieurs situations sont ici possibles. Les véhicules sont par exemple disposés face à face, l'un au moins des deux véhicules circulant en direction de l'autre véhicule. Les véhicules peuvent également circuler l'un derrière l'autre, le véhicule qui suit ayant une vitesse supérieure au véhicule qui précède.

Dans tous les cas l'un au moins des véhicules comporte un élément gonflable susceptible de se déployer entre les véhicules.

Les générateurs de gaz nécessaires à l'ouverture des éléments gonflables ne sont pas représentés aux figures 1A à 1E.

Les éléments gonflables sont disposés sur les véhicules en position repliée.

L'implantation des éléments gonflables est fonction des zones du véhicule que l'on souhaite protéger.

Conformément à un premier mode de mise en oeuvre particulier du procédé de protection contre les chocs entre deux véhicules au moyen d'au moins un élément gonflable conforme à l'invention représenté aux figures 1A à 1E, chacun des véhicules comporte un élément gonflable, tous deux susceptibles de se déployer entre les véhicules.

Conformément à ce premier mode de mise en oeuvre particulier du procédé de l'invention, des balises d'émission/réception sont disposées sur au moins un des véhicules.

Le générateur de gaz reçoit l'ordre de libérer le gaz qu'il comporte du fait de l'émission par la balise d'émission/réception auquel il est associé d'un signal de commande d'ouverture de l'élément gonflable.

Le procédé de protection contre les chocs entre deux véhicules au moyen d'au moins un élément gonflable de l'invention va être décrit au moyen de la succession des situations représentées aux figures 1A à 1E.

Dans la figure 1A, les véhicules sont situés dans une position relative ne présentant pas de risque de collision.

La balise d'émission/réception 5 associée au premier véhicule 1 ne détecte pas le second véhicule 2.

Dans la figure 1B, la balise d'émission/réception auquel est associé le premier véhicule 1 détecte que le premier véhicule 1 va entrer en collision avec le second véhicule 2.

La balise d'émission/réception 5 associée au premier véhicule 1 émet un signal de commande d'ouverture du premier élément gonflable 3 (figure 1C).

La balise de réception 6 associée au second véhicule 2 réceptionne le signal de commande d'ouverture du premier élément gonflable 3 et émet un signal de commande d'ouverture du second élément gonflable 4 (figure 1D).

Il est précisé que s'agissant de chaque balise d'émission/réception 5, 6, il y a lieu de comprendre qu'elle comprend un système de détection d'obstacle, par exemple du type infrarouge ou à effet Doppler ou analogue, et un autre système de communication apte à transmettre un signal de commande d'ouverture d'un élément gonflable vers une autre balise distante et à recevoir un tel signal de commande transmis depuis une autre balise distante. Ce dernier système de communication peut par exemple être un système de radio communication du type hertzien ou autre. Il est entendu que cette communication doit être directive, c'est-à-dire s'établir entre les deux véhicules susceptibles d'entrer en collision (par exemple deux véhicules ferroviaires circulant sur une première voie) et ne pas perturber le système de protection d'un troisième véhicule venant à proximité de ces deux véhicules (par exemple un troisième véhicule ferroviaire se déplaçant sur voie parallèle à la première voie et croisant les deux autres véhicules ferroviaires). La directivité dans le cas d'une communication par radio pourrait par exemple être obtenue en orientant les antennes des systèmes de communication dans l'axe de la voie sur laquelle circule le véhicule et en limitant de façon adéquate la portée de la communication radio. Dans l'application ferroviaire, le système de radio communication pourrait être remplacé par un système de communication par le rail de la voie ou par le tapis de pilotage automatique.

La collision entre les deux véhicules est ainsi amortie du fait de l'ouverture des deux éléments gonflables avant l'impact.

D'autres modes de mise en oeuvre particulier du procédé de protection contre les chocs entre deux véhicules au moyen d'au moins un élément gonflable conforme à l'invention sont possibles.

### Exemple 1 :

Chaque véhicule 1, 2 comporte une balise d'émission/réception 5, 6.

L'exemple 2 correspond à l'exemple précédent dans lequel le procédé est effectif pour chacun des véhicules.

L'ouverture des éléments gonflables se fait dès la première réception par l'une des balises d'émission/réception du signal de commande d'ouverture de l'élément gonflable émis par l'autre balise d'émission/réception.

### Exemple 2 :

Chaque véhicule 1, 2 comporte une balise d'émission/réception 5, 6.

Chacune des balises d'émission/réception associées aux véhicules détecte que l'autre véhicule va entrer en collision avec lui.

Chacune des balises d'émission/réception associées aux véhicules émet un signal de commande d'ouverture de l'élément gonflable associé.

D'une manière générale, les éléments gonflables susceptibles d'être mis en oeuvre dans le procédé de protection contre les chocs entre deux véhicules de l'invention, sont tels que le matériau qui les constitue et la pression utilisée permettent:
- une grande solidité du fait que les véhicules rentrant en collision génèrent des niveaux d'énergie importants,
- une conservation de la capacité d'absorption des éléments gonflables pendant une période relativement importante, environ 10 secondes, du fait qu'il est pratiquement impossible de définir de façon simple le temps qui va s'écouler entre le déclenchement d'au moins un élément gonflable et la collision.

Le procédé de protection contre les chocs entre deux véhicules de l'invention peut être mis en oeuvre quelle que soit la position des éléments gonflables autour du véhicule.

Un élément gonflable peut être déclenché par une balise d'émission/réception en fonction de la direction de réception du signal de commande d'ouverture de l'élément gonflable émis par une autre balise d'émission/ réception.

Il est clair que les balises d'émission/réception peuvent être mises hors service, voire supprimées, le conducteur du véhicule étant alors susceptible de déclencher, en mode manuel, l'ouverture des éléments gonflables.

Il résulte de ce qui précède un dispositif pour la mise en oeuvre du procédé de protection contre les chocs entre deux véhicules 1, 2 au moyen d'un élément gonflable 5, 6 dans lequel le premier véhicule 1 comporte une balise d'émission/réception 5 et le second véhicule 2 comporte une balise de réception 6.

Le dispositif pour la mise en oeuvre du procédé de protection contre les chocs entre deux véhicules 1, 2 au moyen d'un élément gonflable 5, 6 relatif aux exemples 1 et 2 est tel que chaque véhicule 1, 2 comporte une balise d'émission/réception 5.

## Revendications

1. Procédé de protection contre les chocs entre deux véhicules (1, 2) au moyen d'un élément gonflable (5, 6), dans lequel chacun des véhicules (1, 2) comporte un élément gonflable (5, 6) susceptible de se déployer sous la commande d'un signal de commande d'ouverture dudit élément gonflable, ledit procédé étant **caractérisé par**:
- la détection depuis un premier véhicule (1) de l'entrée en collision desdits véhicules (1, 2),
- l'émission depuis ledit premier véhicule (1) d'un premier signal de commande d'ouverture dudit élément gonflable (3) associé audit premier véhicule,
- la réception par ledit second véhicule (2) dudit premier signal de commande d'ouverture dudit élément gonflable (3) associé audit premier véhicule et
- l'émission sur ledit second véhicule (2) d'un second signal de commande d'ouverture dudit élément gonflable (4) associé audit second véhicule.

2. Procédé selon la revendication 1, défini par:
- la détection depuis ledit second véhicule (2) de l'entrée en collision desdits véhicules (1, 2),
- l'émission depuis ledit second véhicule (2) dudit second signal de commande d'ouverture dudit élément gonflable (4) associé audit second véhicule,
- la réception par ledit premier véhicule (1) dudit second signal de commande d'ouverture dudit élément gonflable (4) associé audit second véhicule et
- l'émission sur ledit premier véhicule (1) dudit premier signal de commande d'ouverture dudit élément gonflable (3) associé audit premier véhicule.

3. Procédé selon l'une quelconque des revendications 1 à 2, dans lequel l'émission est déclenchée par le conducteur du véhicule.

4. Procédé selon l'une quelconque des revendications 1 à 3, dans lequel l'émission et la réception sont obtenues au moyen de balises d'émission/réception disposées sur lesdits véhicules.

5. Procédé selon l'une quelconque des revendications précédentes, dans lequel le déclenchement d'un élément gonflable par une balise d'émission/réception est effectué en fonction de la direction de réception du signal de commande d'ouverture de l'élément gonflable émis par une autre balise d'émission/réception.

6. Dispositif pour la mise en oeuvre du procédé de protection contre les chocs entre deux véhicules (1, 2) au moyen d'un élément gonflable (5, 6) selon la revendication 1, **caractérisé en ce que** ledit premier véhicule (1) comporte une balise d'émission/réception (5) et **en ce que** ledit second véhicule (2) comporte une balise de réception (6).

7. Dispositif pour la mise en oeuvre du procédé de protection contre les chocs entre deux véhicules (1, 2) au moyen d'un élément gonflable (5, 6) selon l'une quelconque des revendications 2 à 5, **caractérisé en ce que** chaque véhicule (1, 2) comporte une balise d'émission/réception (5).

## Claims

1. A method of protection against impacts between two vehicles (1, 2) by means of an inflatable member (5, 6) in which each of the vehicles (1, 2) includes an inflatable member (5, 6) adapted to be deployed under the control of a signal commanding opening of said inflatable member, said method being **characterized by**:
- detection from a first vehicle (1) of impending collision of said vehicles (1, 2),
- transmission from said first vehicle (1) of a first signal commanding opening of said inflatable member (3) associated with said first vehicle,
- reception by said second vehicle (2) of said first signal commanding opening of said inflatable member (3) associated with said first vehicle, and
- transmission to said second vehicle (2) of a second signal commanding opening of said inflatable member (4) associated with said second vehicle.

2. A method according to claim 1 defined by:
- detection from said second vehicle (2) of impending collision of said vehicles (1, 2),
- transmission from said second vehicle (2) of said second signal commanding opening of said inflatable member (4) associated with said second vehicle,
- reception by said first vehicle (1) of said second signal commanding opening of said inflatable member (4) associated with said second vehicle, and
- transmission to said first vehicle (1) of said first signal commanding opening of said inflatable member (3) associated with said first vehicle.

3. A method according to claim 1 or claim 2 wherein the driver of the vehicle triggers transmission.

4. A method according to any of claims 1 to 3 wherein transmission and reception are obtained by means of transmit/receive beacons disposed on said vehicles.

5. A method according to any of the preceding claims wherein a transmit/receive beacon triggers an inflatable member according to the direction in which it receives the signal commanding opening of the inflatable member transmitted by another transmit/receive beacon.

6. A device for implementing the method of protection against impacts between two vehicles (1, 2) by means of an inflatable member (5, 6) according to claim 1 **characterized in that** said first vehicle (1) includes a transmit/receive beacon (5) and **in that** said second vehicle (2) includes a receive beacon (6).

7. A device for implementing the method of protection against impacts between two vehicles (1, 2) by means of an inflatable member (5, 6) according to any of claims 2 to 5 **characterized in that** each vehicle (1, 2) includes a transmit/receive beacon (5).

## Patentansprüche

1. Verfahren zum Schutze gegen Zusammenstöße zwischen zwei Fahrzeugen (1, 2) durch ein aufblasbares Element (5, 6), wobei die Fahrzeuge (1, 2) jeweils ein aufblasbares Element (5, 6) aufweisen, das sich unter dem Befehl eines Steuersignals zur Öffnung des aufblasbaren Elements leicht auffaltet, wobei das Verfahren **gekennzeichnet ist durch**:
- den Nachweis des Einfahrens in die Kollision der Fahrzeuge (1, 2) von einem ersten Fahrzeug (1) aus,
- die Emission eines Steuersignals zur Öffnung des aufblasbaren, dem ersten Fahrzeug beigefügten Elements (3) vom ersten Fahrzeug (1) aus,
- den Empfang des ersten Steuersignals zur Öffnung des aufblasbaren. dem ersten Fahrzeug beigefügten Elements (3) **durch** das zweite Fahrzeug (2), und
- die Emission eines zweiten Steuersignals zur Öffnung des aufblasbaren, dem zweiten Fahrzeug beigefügten Elements (4) auf dem zweiten Fahrzeug (2).

2. Verfahren nach Anspruch 1, **gekennzeichnet durch**:
- den Nachweis des Einfahrens der Fahrzeuge (1, 2) in die Kollision vom zweiten Fahrzeug (2) aus,
- die Emission eines Steuersignals zur Öffnung des aufblasbaren, dem zweiten Fahrzeug beigefügten Elements (4) vom zweiten Fahrzeug (2) aus,
- den Empfang des zweiten Steuersignals zur Öffnung des aufblasbaren, dem zweiten Fahrzeug beigefügten Elements (4) **durch** das erste Fahrzeug (1), und
- die Emission des ersten Steuersignals zur Öffnung des aufblasbaren, dem ersten Fahrzeug beigefügten Elements (3) auf dem ersten Fahrzeug (1).

3. Verfahren nach einem der Ansprüche 1 bis 2. wobei die Emission durch den Führer des Fahrzeugs ausgelöst wird.

4. Verfahren nach einem der Ansprüche 1 bis 3, wobei Emission und Empfang durch Emissions/Empfangsbaken erhalten werden, die auf den Fahrzeugen angeordnet sind.

5. Verfahren nach einem der vorhergehenden Ansprüche, wobei die Auslösung eines aufblasbaren Elements durch eine Emissions/Empfangsbake in Abhängigkeit von der Empfangsrichtung des von einer anderen Emissions/Empfangsbake emittierten Steuersignals zur Öffnung des aufblasbaren Elements durchgeführt wird.

6. Vorrichtung zur Durchführung des Schutzverfahrens gegen Zusammenstöße zwischen zwei Fahrzeugen (1, 2) durch ein aufblasbares Element (5, 6) nach Anspruch 1, **dadurch gekennzeichnet, daß** das erste Fahrzeug (1) eine Emissions/Empfangsbake (5) aufweist, und dadurch, daß das zweite Fahrzeug (2) eine Empfangsbake (6) aufweist.

7. Vorrichtung zur Durchführung des Schutzverfahrens gegen Zusammenstöße zwischen zwei Fahrzeugen (1, 2) durch ein aufblasbares Element (5, 6) nach einem der Ansprüche 2 bis 5, **dadurch gekennzeichnet, daß** jedes Fahrzeug (1, 2) eine Emissions/Empfangsbake (5) aufweist.
